# NOUVEAU FASCICULE DE BREVET EUROPEEN

(11) **EP 1 994 718 B2**
(45) Date de publication et mention de la décision concernant l'opposition: **26.08.2015**
(45) Mention de la délivrance du brevet: 26.10.2011
(21) Numéro de dépôt: 07731726.1
(22) Date de dépôt: 12.03.2007
(51) Int. Cl.: H04L 29/06

(54) **PROCÉDÉ ET ÉQUIPEMENT DE DISTRIBUTION DE CONTENUS AUDIOVISUELS NUMÉRIQUES SÉCURISÉS PAR DES SOLUTIONS INTEROPÉRABLES**
VERFAHREN UND VORRICHTUNG ZUR VERTEILUNG SICHERER DIGITALER AUDIOVISUELLER INHALTE MITTELS KOMPATIBLER LÖSUNGEN
METHOD AND DEVICE FOR DISTRIBUTING SECURE DIGITAL AUDIOVISUAL CONTENTS BY INTEROPERABLE SOLUTIONS

(30) Priorité: 13.03.2006 FR 0650829
(43) Date de publication de la demande: 26.11.2008
(73) Titulaire: NAGRA FRANCE SAS, 75015 Paris (FR)
(72) Inventeur: LECOMTE, Daniel, F-75116 Paris (FR); DUPUIS, Sébastien, F-75010 Paris (FR)
(74) Mandataire: Leman Consulting S.A.
(86) Numéro de dépôt international: PCT/FR2007/050910
(87) Numéro de publication internationale: WO 2007/104887

(56) Documents cités:
- WO-A-2004/023717
- WO-A-2006/120535
- US-A1- 2003 159 139

## Description

La présente invention se rapporte au domaine de la distribution de contenus audiovisuels sécurisés par des moyens de protection desdits contenus. La présente invention se rapporte plus particulièrement au moyen de la sécurisation de la distribution d'un contenu audiovisuel à travers un réseau de télécommunication ou sur un support physique tel qu'une carte à mémoire ou un DVD, et utilisant les caractéristiques du format de compression audiovisuel, de façon à permettre une interopérabilité entre les différents moyens de protection.

La présente invention se propose de fournir un système permettant de brouiller visuellement et ou auditivement et de recomposer un contenu audiovisuel numérique distribué à l'utilisateur. L'invention propose un système permettant à l'utilisateur de disposer du contenu audiovisuel protégé de façon sécurisée par un procédé permettant de contenir plusieurs solutions de sécurisation interopérables. L'utilisateur pourra alors disposer du contenu audiovisuel non brouillé en échange d'une transaction prédéfinie par les distributeurs ou à définir au moment de la visualisation du contenu audiovisuel. L'invention permet également un contrôle total de l'utilisation des copies et des droits des oeuvres ainsi diffusées.

Pour éviter des utilisations pirates non autorisées des contenus numériques, certaines solutions proposent de transmettre à l'utilisateur un flux audiovisuel numérique protégé, brouillé et généralement crypté par une ou plusieurs clés de codage. Le désembrouillage est alors conditionné par la réception d'un certificat ou d'une licence qui contient une clé ou plusieurs clés de désembrouillage, ledit certificat ou licence étant généralement envoyé à l'utilisateur en échange d'une transaction payante ou non. Ledit certificat ou licence contient généralement des éléments de droit liés à de possibles utilisations du contenu désembrouillé. Un problème de ce type de solution est qu'un utilisateur armé d'outils puissants peut déterminer la clé ou les clés de désembrouillage sans faire la transaction et obtenir ainsi un flux désembrouillé dont il peut disposer comme il l'entend, soit pour le visualiser et l'entendre de façon illicite, soit pour en faire des copies pirates. Un autre problème est que l'utilisateur doit posséder un terminal qui intègre la méthode de désembrouillage ainsi que la méthode dite de gestion des droits d'utilisation compatibles avec celles utilisées pour embrouiller ledit contenu.

Certaines solutions actuelles de protection permettent la distribution sécurisée de contenus audiovisuels à travers des réseaux de télécommunication ou sur des supports physiques audiovisuels de type carte à mémoire ou DVD, en particulier en utilisant des méthodes de protection appelées DRM (Digital Rights Management : Gestion des Droits Numériques) ou CAS (Conditional Access System : Système d'accès conditionnel). Dans la suite du texte, l'ensemble des DRM et des CAS seront appelées « DRM ».

Une DRM est une méthode de protection mise en oeuvre à l'aide d'un dispositif de protection comprenant:
- des moyens de protection de nature cryptographique ;
- des moyens de gestion des droits numériques ;
- des moyens pour la transmission sécurisée des clés de nature cryptographique.

Toutefois, il existe plusieurs DRM dont certaines sont normalisées, mais toutes ces DRM sont incompatibles entres elles. Un consommateur recevant un contenu audiovisuel protégé par une DRM ne peut le lire que si son terminal possédant le procédé de la DRM en question : l'interopérabilité des contenus et l'interopérabilité des systèmes de protection (DRM, CAS) n'existent pas.

Dans cette optique plusieurs brevets ont été déposés. Ainsi le document EP0778513 (Matsushita) qui décrit un procédé permettant de prévenir l'utilisation illégale d'une information en y ajoutant une information de contrôle afin de vérifier les droits de l'utilisateur. Le système permet de savoir en permanence quelle partie de l'information est utilisée et par quel utilisateur et par là de savoir si cet utilisateur est en position illégale ou pas. Ce procédé sécurise donc les données en y ajoutant des informations additionnelles qui dénaturent l'information initiale, mais l'interopérabilité avec les autres systèmes de DRM n'est pas assurée.

On connaît également les documents WO2004/023717 et US2003/159139 se rapportant à des procédés de distribution sécurisé de contenues.

Le document WO0049483 (Netquartz) nous offre également des procédés et des systèmes pour créer un lien entre les utilisateurs et un éditeur d'entités numérisées. Le procédé comprend l'une au moins des étapes suivantes : l'étape de subdiviser ladite entité numérisée en deux parties ; l'étape de mémoriser une partie dans une zone mémoire d'un serveur connecté à un réseau informatique ; l'étape de transmettre l'autre partie à au moins un utilisateur disposant d'un équipement informatique ; l'étape de connecter ledit équipement informatique audit réseau informatique ; l'étape d'établir un lien fonctionnel entre ladite première partie et ladite deuxième partie. Ces procédés et systèmes ne spécifient pas si la partie mémorisée sur le serveur peut être stockée par l'utilisateur ce qui permettrait à celui-ci de pirater ladite entité numérisée, et l'interopérabilité avec les autres systèmes de DRM n'est pas précisée.

Le document US05937164 d'HyperLOCK Technologies décrit une solution qui consiste à séparer le flux en deux parties dont la plus petite détient une information nécessaire à l'utilisation de la plus grande. Cependant, ce brevet n'est pas suffisant pour répondre au problème identifié. En effet, la suppression d'une partie du flux dénature le format du flux, et ne peut donc pas être reconnu comme un flux standard, exploitable avec des applications logicielles générales. Ce procédé de l'art antérieur nécessite à la fois un logiciel spécifique côté serveur, pour la séparation des deux parties, et un autre logiciel spécifique assurant non seulement la reconstruction du flux, mais également l'acquisition du flux principal et son exploitation selon un format propriétaire à la solution. Ce format propriétaire n'est pas le format initial du flux avant séparation en deux parties, dans cette solution connue ; le problème de l'interopérabilité avec les autres systèmes de DRM n'est pas assuré.

Enfin, dans cette approche, l'état de la technique le plus proche se retrouve dans les documents normalisés par le consortium OMA (Open Mobile Alliance) et en particulier dans les spécifications de la DRM OMA 2.0. Ici encore, il est à noter que cette spécification ne permet pas de résoudre le problème posé puisque OMA définit comment la séquence audiovisuelle originale est entièrement cryptée, puis comment les droits sont structurés dans un objet de droits avant d'être envoyés vers les décodeurs. L'interopérabilité avec les autres DRM n'est pas résolue par OMA.

Pour éviter ces inconvénients, il existe à ce jour deux possibilités : soit les terminaux possèdent l'ensemble des DRM existantes, et lesdits terminaux peuvent donc déprotéger et lire les contenus protégés par toutes les DRM actuelles, mais lesdits terminaux ne pourront pas lire les contenus protégés par des DRM inconnues qui seront utilisées dans le futur; soit les contenus audiovisuels à protéger sont protégés par toutes les DRM existantes et à venir, lesdits contenus devant être protégés et diffusés avec toutes les DRM, ce qui représente des coûts de protection et de diffusion très importants, sans toutefois permettre l'interopérabilité ni des systèmes de DRM, ni le libre échange des fichiers entre les terminaux puisque chaque terminal ne possède pas toutes les DRM.

Par ailleurs, certains terminaux comme des assistants personnels et autres téléphones portables, ne pourront pas posséder plusieurs DRM pour des questions d'architecture logicielles et matérielles.

Ainsi, dans les solutions existantes, si l'on désire transmettre un contenu audiovisuel comprenant plusieurs types de protection DRM, il est nécessaire de transmettre l'ensemble du flux correspondant au contenu audiovisuel, protégé selon les différents formats de DRM. Le volume d'information ainsi transmis est donc égal à la taille du contenu à visualiser fois le nombre de types de DRM utilisées. Toutefois, la transmission d'un tel volume d'information est gênante notamment en cas de transmission du fait des bandes passantes et des mémoires limitées.

L'invention résout notamment ce problème grâce à un procédé de distribution d'un flux audiovisuel nominal à un équipement destinataire, le flux audiovisuel nominal comprenant des coefficients nominaux, le procédé comprenant :
- une étape consistant à modifier dans le flux audiovisuel nominal au moins un coefficient nominal parmi lesdits coefficients nominaux de sorte à générer un flux principal modifié ;
- générer une information complémentaire de sorte que le flux audiovisuel nominal soit susceptible d'être consommé à partir de l'information complémentaire et du flux principal modifié,
   le procédé comprenant des étapes consistant à :
   - appliquer une pluralité de méthodes de protection à l'information complémentaire de sorte à générer une pluralité d'informations complémentaires protégées chacune des informations complémentaires protégées respectives permettant la consommation du flux nominal à partir du flux principal modifié en cas d'application d'une méthode de d'accès compatible avec la méthode de protection qui a servi à la protéger ;;
   - transmettre à l'équipement destinataire le flux principal modifié et la pluralité d'informations complémentaires protégées.

Ainsi, selon l'invention, les différentes méthodes de protection, notamment de type DRM, sont appliquées sur l'information complémentaire. Par définition, seules des méthodes d'accès compatibles avec une DRM permettent l'accès à l'information complémentaire à partir de l'information complémentaire protégée. Le flux principal modifié, peut alors être transmis à tous les équipements destinataires de façon identique et sous une forme non protégée, les droits d'accès des différents destinataires étant définis dans l'information complémentaire protégée. De la sorte, l'application d'une pluralité de types de protection DRM, qui est préférable pour garantir que le destinataire est possède bien au moins un des types de DRM permettant de déprotéger de contenu, n'est appliquée que sur l'information complémentaire. Cette information complémentaire étant susceptible d'être de taille beaucoup plus réduite que le flux nominal, la quantité de données à transmettre est donc réduite. De façon générale, le volume de données à transmettre selon l'invention n'est plus proportionnel au volume du contenu nominal fois le nombre de protections appliquées comme dans les solutions existantes, mais seulement au volume de l'information complémentaire fois le nombre de protections appliquées. Ce volume est donc susceptible d'être beaucoup plus faible, et typiquement cent fois plus faible pour une information complémentaire ayant un volume d'environ 1% du contenu nominal.

L'information complémentaire dépend du type de contenu audiovisuel à transmettre. Cette information complémentaire peut par exemple être générée comme dans la demande WO 2004/032418 pour une séquence audio, ou comme dans la demande WO 2003/063445 pour une séquence audiovisuelle au format MPEG. L'information complémentaire peut également comprendre des informations personnalisées en fonction du destinataire comme dans la demande WO 2004/073311, ou des informations de marquage visible comme dans la demande WO 2004/062281 ou invisible. Comme dans ces demandes, le flux principal modifié est de préférence généré en extrayant au moins un coefficient du flux nominal et en insérant ce ou ces coefficients extraits dans l'information complémentaire.

Dans tous ces cas, comme dans l'invention, le traitement de l'information complémentaire et du flux principal modifié par un module de synthèse permet de consommer le flux nominal, par exemple en reconstruisant ce flux à l'identique, ou en lui ajoutant des données visibles ou invisibles, alors que le flux principal modifié n'est pas consommable au niveau de l'équipement destinataire en l'absence de l'information complémentaire.

Selon un premier mode de réalisation de l'invention, le procédé comprend en outre une étape consistant à empaqueter le flux principal modifié et la pluralité d'informations complémentaires protégées de sorte à former un flux empaqueté, et l'étape consistant transmettre à l'équipement destinataire le flux principal modifié et la pluralité d'informations complémentaires protégées comprend une étape consistant à transmettre le flux empaqueté.

Ce mode de réalisation a l'avantage supplémentaire de permettre la transmission, sous la forme d'un flux unique, de la pluralité d'informations complémentaires protégées. Un autre avantage important pour le consommateur est la possibilité de consommer un contenu ainsi acquis sur une pluralité d'équipements contenant des moyens de protection DRM différents.

Selon un autre mode de réalisation, l'étape consistant à transmettre à l'équipement destinataire le flux principal modifié et la pluralité d'informations complémentaires protégées comprend une pluralité d'étapes de transmission de chacune des informations complémentaires sur des voies séparées.

Ce mode de réalisation a l'avantage supplémentaire de permettre de fournir les informations complémentaires protégées à la demande du destinataire, notamment en fonction du type de système de protection de l'équipement destinataire. Ainsi, si le destinataire ne possède pas une des DRM associées à l'information complémentaire protégée par cette DRM, il peut obtenir cette DRM et l'information complémentaire protégée par cette DRM, et ce sans nécessairement recevoir les autres informations complémentaires protégées, ou le flux principal modifié. En particulier, dans ce mode de réalisation, le flux principal modifié est transmis séparément de chacune des informations complémentaires protégées.

L'invention se rapporte également à un dispositif pour la distribution d'un flux audiovisuel nominal à un équipement destinataire, le flux audiovisuel nominal comprenant des coefficients nominaux, le dispositif comprenant :
- des moyens agencés pour modifier, dans le flux audiovisuel nominal au moins un coefficient nominal parmi lesdits coefficients nominaux de sorte à générer un flux principal modifié ;
- des moyens agencés pour générer une information complémentaire de sorte que le flux audiovisuel nominal soit susceptible d'être consommé à partir de l'information complémentaire et du flux principal modifié,
   le dispositif comprenant :
   - des moyens agencés pour appliquer une pluralité de méthodes de protection à l'information complémentaire de sorte à générer une pluralité d'informations complémentaires protégées chacune des informations complémentaires protégées respectives permettant la consommation du flux nominal à partir du flux principal modifié en cas d'application d'une méthode d'accès compatible avec la méthode de protection qui a servi à la protéger ;
   - des moyens agencés pour transmettre à l'équipement destinataire le flux principal modifié et la pluralité d'informations complémentaires protégées.

Selon une première variante, le décodeur, qui reçoit ladite information numérique complémentaire empaquetée avec ledit flux principal modifié, intègre au moins un moyen d'accès de ladite information numérique complémentaire compatible avec celui utilisé lors de l'étape de protection.

Selon une deuxième variante, ledit serveur transmet à un décodeur, en plus de ladite information numérique complémentaire empaquetée avec ledit flux principal modifié, un moyen de protection de ladite information numérique complémentaire compatible avec celui utilisé lors de l'étape de protection.

Avantageusement, l'étape de sélection des droits digitaux se fait en fonction des caractéristiques du décodeur.

Avantageusement, l'étape de sélection des droits digitaux se fait en fonction des caractéristiques de la séquence audiovisuelle originale.

Avantageusement, les droits digitaux sont empaquetés avec ladite information numérique complémentaire.

Avantageusement, ledit décodeur demande audit serveur de lui transmettre ladite information numérique complémentaire protégée avec au moins un des moyens de protection que ledit décodeur possède.

Avantageusement, l'étape de sélection du moyen de protection pour protéger ladite information numérique complémentaire est réalisée en fonction des moyens de protection dudit décodeur.

Avantageusement, le moyen de protection est envoyé au moyen d'un support physique.

Avantageusement, l'étape de transmission de ladite information numérique complémentaire est réalisée au moyen d'un support physique.

Avantageusement, l'étape de transmission dudit flux principal modifié est réalisée au moyen d'un support physique..

Avantageusement, l'étape de transmission de ladite information numérique complémentaire empaquetée avec ledit flux principal modifié est réalisée au moyen d'un support physique.

Avantageusement, ledit décodeur crée, en fonction des droits digitaux reçus, une copie privée de la séquence audiovisuelle identique à l'original.

Avantageusement, ledit décodeur crée une copie de ladite information numérique complémentaire empaquetée avec ledit flux principal modifié sur un support physique

L'invention concerne également un système de distribution de contenus audiovisuels sécurisés par des moyens de protection pour la mise en oeuvre du procédé **caractérisé en ce qu'**il comporte en outre au moins un module de séparation de la séquence audiovisuelle originale, au moins un moyen de protection et de gestion des droits digitaux de ladite information complémentaire, un module d'empaquetage de ladite information complémentaire ainsi protégée avec le flux principal modifié, la transmission du flux ainsi empaqueté vers un décodeur possédant au moins un moyen de protection et de recomposition de la séquence audiovisuelle originale à partir dudit flux principal modifié et de ladite information complémentaire déprotégée.

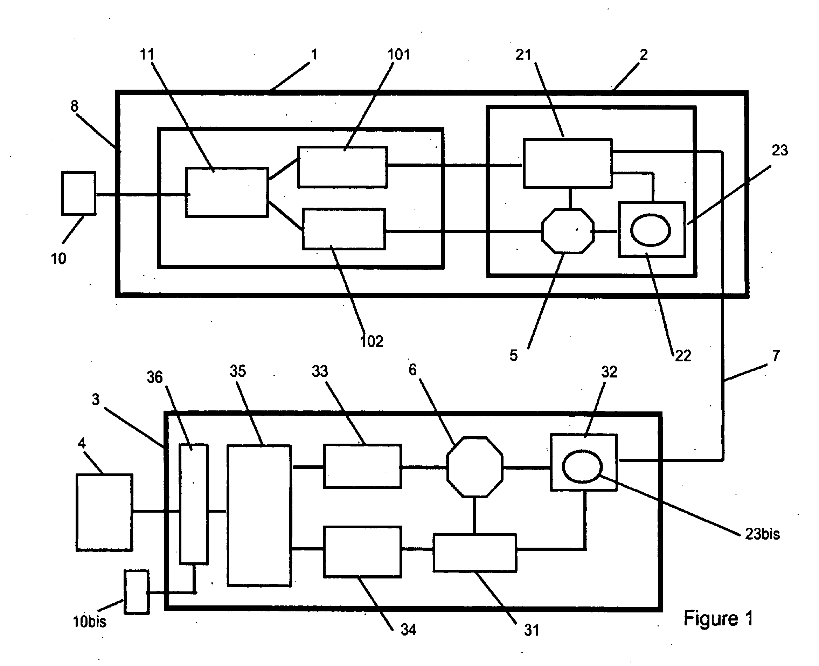

La présente invention sera mieux comprise à la lecture de la description d'un exemple non limitatif de réalisation qui suit, se référant au dessin annexé où la figure 1 décrit l'architecture d'ensemble d'un système pour la mise en oeuvre du procédé conforme à l'invention.

Le principe général d'un procédé de sécurisation d'un flux audiovisuel est exposé ci-après. L'objectif est d'autoriser les services de audiovisuel à la demande et à la carte à travers tous les réseaux de diffusion et l'enregistrement local dans la mémoire du boîtier décodeur numérique de l'usager, ledit boîtier décodeur pouvant être un décodeur relié à une télévision, un ordinateur personnel de type PC ou MAC, un terminal de poche comme un téléphone ou encore un assistant personnel type PDA. La solution consiste à protéger, par une ou plusieurs DRM, une toute petite partie du programme audiovisuel, cette partie étant primordiale pour écouter et/ou visualiser ledit programme audiovisuel sur un écran, mais étant d'un volume très faible (environ 1%) par rapport au volume total du programme audiovisuel numérique qui sera libre de diffusion et de copie.

La partie manquante protégée par une ou plusieurs DRM est soit re-intégrée avec la plus grande partie du flux audiovisuel pour reconstituer un contenu audiovisuel standard dont seulement une petite partie est ainsi protégée par une DRM, soit empaquetée avec la plus grande partie du flux audiovisuel en étant par exemple ajoutée aux données complémentaires ou aux méta données du fichier comportant le flux audiovisuel original modifié, soit transmise via le réseau de diffusion et de transmission au moment de la visualisation dudit programme audiovisuel numérique.

Dans ce dernier cas, la partie manquante protégée par une DRM est envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous-ensemble de la bande passante partagée sur un réseau câblé ou satellitaire.

La plus grande partie du flux audiovisuel est distribuée librement aux utilisateurs et entre les utilisateurs de façon physique sur tout support de type cartes à mémoire, CD, DVD, etc. Ladite plus grande partie du flux audiovisuel peut être lue par un dispositif classique de lecture de ce type de support (lecteur de CD-ROM et/ou de DVD, lecteur de cartes à mémoire).

Alternativement, la plus grande partie du flux audiovisuel est transmise via un réseau de télécommunication ou de diffusion classique.

Ainsi, l'utilisateur ne dispose jamais sur son équipement de l'intégralité du flux audiovisuel original sous forme numérique non protégée, et ne peut donc pas reproduire celui-ci de façon illégale. Dans la suite du texte, la plus grande partie, distribuée à l'utilisateur est appelée « flux principal modifié ». La partie manquante est appelée « information numérique complémentaire ».

On décrit maintenant un mode de réalisation de l'invention en référence aux figures annexées dans lesquelles :
- FIG. 1 représente un schéma d'un ensemble serveur décodeur sur lequel est mis en oeuvre le procédé selon l'invention ;
- FIG. 2 représente un mode de réalisation de l'invention dans lequel les informations complémentaires protégées sont empaquetées avec le flux principal modifié et transmises avec lui ;
- FIG. 3 représente un autre mode de réalisation de l'invention dans lequel les informations complémentaires protégées sont transmises indépendamment du flux principal modifié.

Dans les figures 1 à 3, des références identiques se rapportent à des caractéristiques techniques similaires.

Sur la figure 1, le décodeur audiovisuel (3) de l'utilisateur est adapté pour relier au moins un dispositif d'affichage et d'écoute, par exemple un moniteur, un audiovisuel projecteur ou un dispositif de type écran de télévision (4), à au moins une interface au réseau de transmission et de diffusion (7) ou à un lecteur de supports physiques (32). Selon la présente invention, cet agencement est composé d'un module décodeur (3) comprenant principalement, d'une part, une unité de traitement adaptée pour traiter, en particulier décoder et désembrouiller tout flux audiovisuel numérique selon un programme logiciel de décodage et désembrouillage pré-chargé appelé DRM (6), et, d'autre part, au moins une interface d'écran (4) et optionnellement une interface de connexion à un réseau local ou étendu(7).

Comme le montre la figure 1, le décodeur (3) est relié à un réseau de transmission et de diffusion (7) tel qu'un modem, un modem satellite, un modem câble, d'une interface de ligne vers des réseaux de télécommunication sans fils (GSM, GPRS, UMTS), à fibre optique ou d'une interface radio ou infrarouge pour la communication sans-fil.

C'est par cette liaison classique de diffusion audiovisuelle que seront transmis les contenus des programmes audiovisuels comme des films ou tout autre séquence audiovisuelle ou multimédia. Toutefois, de façon à ne pas laisser faire de copies pirates, avant de transmettre le contenu audiovisuel depuis le serveur (1), il est prévu de conserver une petite partie du contenu audiovisuel (102) dans ledit serveur (1). De même si le contenu audiovisuel est distribué par le moyen d'un support physique comme une mémoire ou un disque (23) et non plus uniquement à travers un réseau de transmission et de diffusion large bande (7), une petite partie du contenu audiovisuel est enlevée de celui-ci avant qu'il soit enregistré sur ledit support (23).

En cas de visualisation d'un programme audiovisuel en temps réel via un réseau de télécommunication, cette petite partie du contenu audiovisuel conservée dans le serveur (1) sera protégée par une DRM (5) compatible avec la DRM (6) du décodeur (3) puis envoyée au module (3) via le réseau de télécommunication (7).

Alternativement, cette petite partie du contenu audiovisuel conservée dans le serveur (1) sera protégée par une DRM (5) puis transmise au module (3) au moyen d'un support physique comme une carte à mémoire (23) enregistrée par le module d'enregistrement (22) qui peut aussi bien enregistrer des cartes à mémoire, des CD ou des DVD.

La présente invention sera mieux comprise à la lecture d'un exemple de réalisation, en référence au dessin en annexe. Dans cet exemple de réalisation, le contenu audiovisuel subit une première étape d'analyse. Le flux audiovisuel numérique entrant (10) est envoyé au dispositif d'analyse (11) qui utilise les caractéristiques du format de codage audiovisuel du flux (10) pour déterminer un flux principal modifié (101) et une information numérique complémentaire (102). Le flux principal modifié (101) a le même format que le flux entrant (10) mais a subi des modifications de certains paramètres. Le flux principal modifié est donc lisible sur un lecteur standard de ce format, mais l'affichage du contenu audiovisuel correspondant n'est pas correct du point de vue de la perception humaine. Dans le cas du standard audiovisuel numérique MPEG, les modifications apportées au flux entrant (10) peuvent être : substitution de certains coefficients DC de certains blocs, substitution des informations sur la compensation de mouvement, substitution de l'ordre de balayage des coefficients de certaines images, etc. L'information numérique complémentaire (102) extraite ne représente dans ce cas qu'environ 1 % des données du flux principal modifié (101) pour brouiller presque totalement visuellement et/ou auditivement un contenu audiovisuel original (11).

Les modifications apportées et les éventuelles informations originales remplacées dans le flux principal modifié (101) sont stockées dans l'information numérique complémentaire (102) pour être protégées ultérieurement par une DRM(5).

Un utilisateur disposant chez lui de l'équipement client (3) peut lire tout contenu audiovisuel provenant du réseau de télécommunication (7) ou provenant du lecteur de supports physiques (32). Lorsqu'il désire visionner le flux audiovisuel original (10), il ne peut pas le faire qu'en récupérant l'information numérique complémentaire (102).

Selon un mode de réalisation particulier, la consommation d'un contenu audiovisuel est conditionnée par des droits digitaux. Les droits digitaux représentent l'information qui précise les conditions dans lesquelles un contenu peut être consommé: (a) le nombre des consommations du contenu, (b) la date de validité à partir de laquelle le contenu peut être consommé, (c) la date d'expiration à partir de laquelle le contenu ne peut plus être consommé, (d) autre types des droits, comme le domaine pour lequel la consommation est permise, le type de décodeur (3) qui permet la consommation, etc.

Avantageusement, des droits digitaux sur la consommation du flux numérique principal sont enregistrés avec l'information numérique complémentaire (102) par le module DRM (5) dans l'information numérique complémentaire protégée transmise au multiplexeur (21) ou à l'enregistreur (22).

L'information numérique complémentaire (102) ainsi que le flux principal modifié (101) peuvent donc arriver indifféremment dans le décodeur (3), ensemble ou séparément, par le réseau de télécommunication (7) ou via un support physique (23bis) lu par le lecteur (32) de son équipement client (3).

Dans un premier exemple, nous prendrons le cas où le flux principal modifié (101) est enregistré avec ou sans l'information numérique complémentaire (102) dans un module physique (23) à partir de l'enregistreur (22).

Rappelons que lorsqu'un utilisateur du décodeur (3) désire visionner le flux audiovisuel original (10), il ne peut pas le faire qu'en récupérant l'information numérique complémentaire (102), sinon, il ne pourra visualiser et entendre que le flux principal modifié (101).

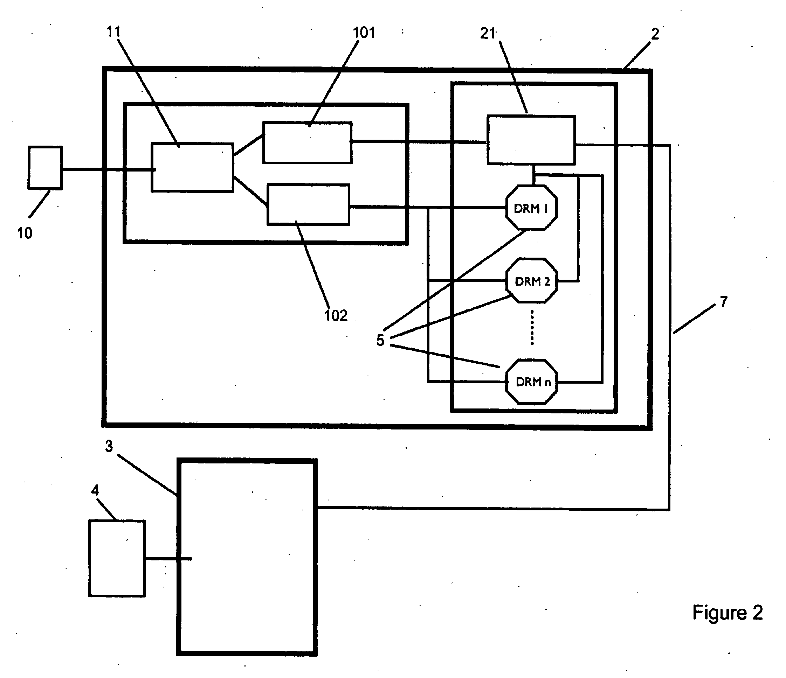

La FIG. 2 représente un mode de réalisation de l'invention dans lequel l'information complémentaire 102 est protégée par une pluralité de DRM 5 distinctes, référencées DRM 1 à DRM n, de sorte à générer une pluralité d'informations complémentaires protégées. Ces informations complémentaires protégées sont empaquetées avec le flux principal modifié 101 au niveau du multiplexeur 21. Le flux empaqueté ainsi obtenu est ensuite transmis par la liaison 7 au décodeur 3.

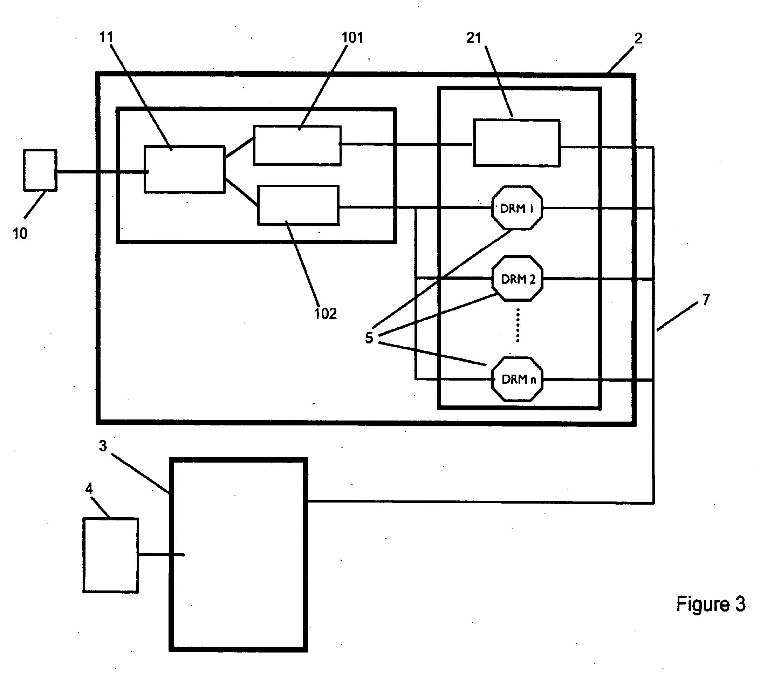

La FIG. 3 représente un autre mode de réalisation de l'invention. Dans cet autre mode de réalisation, l'information complémentaire 102 est également protégée par une pluralité de DRM 5 distinctes, référencées DRM 1 à DRM n, de sorte à générer une pluralité d'informations complémentaires protégées. Toutefois, à la différence du mode de réalisation précédent en référence à la FIG. 2, les informations complémentaires protégées ne sont pas empaquetées avec le flux principal modifié 101, et sont transmises par la liaison 7 indépendamment du flux principal modifié 101. Dans ce mode de réalisation, le multiplexeur 21 est donc optionnel et peut être supprimé du module de protection 2.

Pour un utilisateur désirant lire en clair un contenu enregistré sur un support physique (23bis), à partir d'un décodeur (3) possédant une ou plusieurs modules DRM (6), trois cas peuvent alors se présenter :
- 1- soit le support physique (23bis) contient l'information numérique complémentaire (102) empaquetée avec flux principal modifié (101) et protégée avec une pluralité de DRM (5) compatible avec au moins un module DRM (6) utilisé par le décodeur (3), comme illustré Figure 2.
- 2- soit le support physique (23bis) contient l'information numérique complémentaire (102) empaquetée avec flux principal modifié (101) et protégée avec une pluralité de DRM (5) non compatible avec aucun module DRM (6) utilisé par le décodeur (3), comme illustré Figure 2.
- 3- soit le support physique (23bis) contient seulement le flux principal modifié (101), comme illustré Figure 3.

Analysons ces trois cas :
-1- Si l'information numérique complémentaire (102) a été protégée avec une DRM (5) compatible avec au moins un module DRM (6) du décodeur (3) et empaquetée avec flux principal modifié (101), le lecteur (32) va lire la support physique (23bis) et transmet son contenu vers le multiplexeur (31) qui transmet à son tour d'une part le flux principal modifié (101) vers la mémoire tampon (34) et d'autre part l'information numérique complémentaire (102) protégée par la DRM (5) compatible avec la DRM (6) du décodeur (3), vers le module DRM (6).
   En fonction des droits digitaux contenus dans l'information complémentaire (102), ledit module DRM (6) déprotège l'information numérique complémentaire (102) et la transmet au tampon (33).
   Le dispositif de synthèse (35) reçoit alors la portion d'information numérique complémentaire à travers le tampon (33) et la portion à afficher du flux principal modifié à travers la mémoire tampon (34). A partir de l'information numérique complémentaire (102) et du flux principal modifié (101), le dispositif de synthèse (35) reconstitue un flux strictement identique au flux original (10) et le transmet à un décodeur classique (36) du format du flux original. Le flux décodé est affiché sur l'écran de visualisation (4).
   Avantageusement, le flux décodé est envoyé à un module d'enregistrement (10bis) pour faire une copie privée du contenu sur un support physique tel qu'un DVD, un CD ou une carte mémoire.
-2- Si l'information numérique complémentaire (102) a été protégée avec une DRM (5) non compatible avec aucun module DRM (6) utilisé par le décodeur (3), et empaquetée avec flux principal modifié (101), le lecteur (32) va lire la support physique (23bis) et transmet son contenu vers le multiplexeur (31) qui transmet à son tour d'une part le flux principal modifié (101) vers la mémoire tampon (34) et d'autre part l'information numérique complémentaire (102) protégée par la DRM (5) non compatible avec la DRM (6) du décodeur (3), vers le module DRM (6).
   Ledit module DRM (6) constate sa non compatibilité avec la DRM (5) utilisée et donc son incapacité à déprotéger l'information numérique complémentaire (102).
   En fonction d'une application non décrite dans le présent texte, le décodeur (3) informe l'utilisateur qu'il ne possède donc pas les droits pour voir ce contenu, et lui propose éventuellement de se connecter à un serveur pour récupérer l'information numérique complémentaire (102).
   De façon automatique ou contrôlée par l'utilisateur, le décodeur (3) se connecte alors via le réseau (7) au module de protection (2) pour lui signaler qu'il souhaite recevoir l'information numérique complémentaire (102) et qu'il possède tels modules de DRM (6) dans son décodeur (3).
   Le module de protection (2) choisi alors un module de DRM (5) compatible avec au moins un module DRM (6) du décodeur (3) afin de protéger l'information complémentaire (102) avant de l'envoyer au décodeur (3) via la liaison (7).
   Avantageusement, le module de protection (2) télécharge dans le décodeur (3), un nouveau module DRM (6) compatible avec le module DRM (5) qui a été utilisé pour protéger l'information numérique complémentaire (102).
   Le multiplexeur (31) transmet alors l'information numérique complémentaire (102) protégée par la DRM (5) compatible avec la DRM (6) du décodeur (3), vers le module DRM (6). Ledit module DRM (6) déprotège l'information numérique complémentaire (102) et la transmet au tampon (33).
   Le dispositif de synthèse (35) reçoit ainsi la portion d'information numérique complémentaire à travers le tampon (33) et la portion à afficher du flux principal modifié à travers la mémoire tampon (34). A partir de l'information numérique complémentaire (102) et du flux principal modifié (101), le dispositif de synthèse (35) reconstitue un flux strictement identique au flux original (10) et le transmet à un décodeur classique (36) du format du flux original. Le flux décodé est affiché sur l'écran de visualisation (4).
-3- Si le support physique (23bis) contient seulement le flux principal modifié (101), le lecteur (32) va lire le support physique (23bis) et transmet son contenu vers le multiplexeur (31) qui transmet à son tour le flux principal modifié (101) vers la mémoire tampon (34).
   Le module DRM (6) constate qu'il n'y a pas d'information numérique complémentaire (102).
   En fonction d'une application non décrite dans le présent texte, le décodeur (3) informe l'utilisateur qu'il ne possède donc pas les droits pour voir ce contenu, et lui propose éventuellement de se connecter à un serveur pour récupérer l'information numérique complémentaire (102).
   Comme dans le cas précédent, de façon automatique ou contrôlée par l'utilisateur, le décodeur (3) se connecte alors via le réseau (7) au module de protection (2) pour lui signaler qu'il souhaite recevoir l'information numérique complémentaire (102) et qu'il possède tels modules de DRM (6) dans son décodeur (3).

Le module DRM (5) choisi alors un module de DRM compatible avec au moins un module DRM (6) du décodeur (3) afin de protéger l'information complémentaire (102) avant de l'envoyer au décodeur (3) via la liaison (7).

Avantageusement, le module de protection (2) télécharge dans le décodeur (3), un nouveau module DRM (6) compatible avec le module DRM (5) qui a été utilisé pour protéger l'information numérique complémentaire (102).

Le multiplexeur (31) transmet alors l'information numérique complémentaire (102) protégée par la DRM (5) compatible avec la DRM (6) du décodeur (3), vers le module DRM (6). Ledit module DRM (6) déprotège l'information numérique complémentaire (102) et la transmet au tampon (33).

Le dispositif de synthèse (35) reçoit ainsi la portion d'information numérique complémentaire à travers le tampon (33) et la portion à afficher du flux principal modifié à travers la mémoire tampon (34). A partir de l'information numérique complémentaire (102) et du flux principal modifié (101), le dispositif de synthèse (35) reconstitue un flux strictement identique au flux original (10) et le transmet à un décodeur classique (36) du format du flux original. Le flux décodé est affiché sur l'écran de visualisation (4).

Dans un deuxième exemple, nous prendrons le cas où le flux principal modifié (101) est transmis avec ou sans l'information numérique complémentaire (102) au décodeur (3) via le réseau de télécommunication (7).

Ce réseau de télécommunication est un réseau téléphonique classique ou un réseau cellulaire de type GSM, GPRS ou UMTS ou un réseau de type DSL ou BLR, ou encore un réseau câblé ou satellitaire.

Pour un utilisateur désirant lire en clair un contenu provenant du réseau (7), à partir d'un décodeur (3) possédant une ou plusieurs modules DRM (6), trois cas peuvent alors se présenter :
-1- soit le réseau (7) transmet l'information numérique complémentaire (102) empaquetée avec flux principal modifié (101) et protégée avec une pluralité de DRM (5) compatible avec au moins un module DRM (6) utilisé par le décodeur (3), comme illustré Figure 2.
-2- soit le réseau (7) transmet l'information numérique complémentaire (102) empaquetée avec flux principal modifié (101) et protégée avec une pluralité de DRM (5) non compatible avec aucun module DRM (6) utilisé par le décodeur (3), comme illustré Figure 2,
-3- soit réseau (7) transmet seulement le flux principal modifié (101), comme illustré Figure 3.

L'homme de l'art comprend immédiatement que ces trois cas sont semblables aux trois cas précédents en substituant ce qui est enregistré sur le support physique (23bis) par ce qui est reçu par le réseau (7).

Avantageusement, le décodeur (3) enregistre sur un support physique (23bis) l'information numérique complémentaire (102) empaquetée avec flux principal modifié (101) et protégée avec une ou plusieurs DRM.

Avantageusement, le décodeur (3) enregistre sur ledit support physique (23bis) les droits digitaux protégés avec une ou plusieurs DRM.

L'interopérabilité entre les différents systèmes de DRM est ainsi assurée par le fait que le même flux principal modifié (101) est envoyé librement à tous les décodeurs (3) et que seulement une petite partie (environ 1%) est protégée par une ou plusieurs DRM (5) avant d'être envoyée vers les terminaux décodeurs (3) possédant une DRM (6) compatible avec ladite DRM (5).

Avantageusement, chaque information numérique complémentaire (102) est personnalisée pour chaque utilisateur d'un décodeur (3).

Avantageusement, le module de protection (2) enregistre sur le support physique (23) un ou plusieurs modules de DRM (6).

Avantageusement, le décodeur (3) met à jour ses modules de DRM (5) à partir des supports physiques (23bis) qui contiennent des modules de DRM (5).

Avantageusement, le décodeur (3) met à jour ses modules de DRM (5) à partir du module de protection (2).

## Revendications

1. Procédé de distribution d'un flux principal modifié issu d'un flux audiovisuel nominal à un équipement destinataire, le flux audiovisuel nominal comprenant des coefficients nominaux, le procédé étant **caractérisé en ce qu'**il comprend des étapes consistant à :
- modifier dans le flux audiovisuel nominal au moins un coefficient nominal parmi lesdits coefficients nominaux de sorte à générer un flux principal modifié ayant le même format que le flux nominal ;
- générer une information complémentaire comprenant au moins le coefficient **nominal du flux audiovisuel nominal** de sorte que le flux audiovisuel nominal soit susceptible d'être consommé à partir de l'information complémentaire et du flux principal modifié,
- appliquer une pluralité de méthodes de protection à l'information complémentaire de sorte à générer une pluralité d'informations complémentaires protégées, chacune desdites informations complémentaires protégées permettant la consommation du flux nominal à partir du flux principal modifié en cas d'application d'une méthode d'accès compatible avec la méthode de protection qui a servi à la protéger ;
- transmettre à l'équipement destinataire le flux principal modifié et la pluralité d'informations complémentaires protégées.

2. Procédé selon la revendication 1 dans lequel l'étape consistant à transmettre à l'équipement destinataire le flux principal modifié et la pluralité d'informations complémentaires protégées comprend une pluralité d'étapes de transmission de chacune des informations complémentaire protégées sur des voies séparées.

3. Procédé selon la revendication 2 dans lequel le flux principal modifié est transmis séparément de chacune des informations complémentaires protégées.

4. Procédé selon la revendication 1 comprenant en outre une étape consistant à empaqueter le flux principal modifié et la pluralité d'informations complémentaires protégées de sorte à former un flux empaqueté, et dans lequel l'étape consistant transmettre à l'équipement destinataire le flux principal modifié et la pluralité d'informations complémentaires protégées comprend une étape consistant à transmettre le flux empaqueté.

5. Dispositif pour la distribution d'un flux principal modifié issu d'un flux audiovisuel nominal à un équipement destinataire, le flux nominal comprenant des coefficients nominaux, le dispositif comprenant :
- des moyens agencés pour modifier, dans le flux audiovisuel nominal au moins un coefficient nominal parmi lesdits coefficients nominaux de sorte à générer un flux principal modifié ayant le même format que le flux nominal ;
- des moyens agencés pour générer une information complémentaire comprenant le au moins un coefficient nominal **du flux audiovisuel nominal** de sorte que le flux audiovisuel nominal soit susceptible d'être consommé à partir de l'information complémentaire et du flux principal modifié, le dispositif étant **caractérisé en ce qu'**il comprend :
- des moyens agencés pour appliquer une pluralité de méthodes de protection à l'information complémentaire de sorte à générer une pluralité d'informations complémentaires protégées, chacune des informations complémentaires protégées respectives permettant la consommation du flux nominal à partir du flux principal modifié en cas d'application d'une méthode d'accès compatible avec une méthode de protection respective;
- des moyens agencés pour transmettre à l'équipement destinataire le flux principal modifié et la pluralité d'informations complémentaires protégées.

6. Dispositif pour recevoir un flux principal modifié et consommer un flux audiovisuel nominal, le dispositif comprenant :
- des moyens pour recevoir un flux principal modifié **et une pluralité d'information complémentaires protégées selon le procédé de la revendication 1;**
- des moyens d'accès (6) agencés pour accéder à l'information complémentaire à partir d'au moins une information complémentaire protégée parmi la pluralité d'informations complémentaires protégées ;
- des moyens pour modifier, sur la base de l'information complémentaire, dans le flux principal modifié au moins un coefficient nominal parmi des coefficients nominaux de sorte à obtenir un flux audiovisuel nominal ;
- des moyens pour consommer le flux audiovisuel nominal.

## Patentansprüche

1. Verfahren zum Senden einer veränderten Hauptübertragung aus einer nominalen audiovisuellen Übertragung an eine Empfängereinrichtung, wobei die nominale audiovisuelle Übertragung Nennkoeffizienten aufweist, wobei das Verfahren **dadurch gekennzeichnet ist, dass** es Phasen umfasst, die aus folgendem bestehen:
- Veränderung von mindestens ein Nennkoeffizient der besagten Nennkoeffizienten in der nominalen audiovisuellen Übertragung, um eine veränderte Hauptübertragung zu erzeugen mit dem gleichen Format wie die nominale Übertragung;
- Erzeugung einer komplementären Information, die mindestens der Nennkoeffizient der nominalen audiovisuellen Übertragung umfasst, so dass die nominale audiovisuelle Übertragung ausgehend von der komplementären Information und der veränderten Hauptübertragung konsumiert werden kann,
- Anwendung einer Vielzahl von Schutzmethoden auf die komplementäre Information, um eine Vielzahl von geschützten komplementären Informationen zu erzeugen, von denen jede den Konsum der nominalen Übertragung ausgehend von der veränderten Hauptübertragung gestattet, bei Anwendung einer Zugriffsmethode, die mit der Schutzmethode kompatibel ist, die dazu diente, sie schützen;
- Übertragung der veränderten Hauptübertragung und der Vielzahl von geschützten komplementären Informationen an die Empfängereinrichtung.

2. Verfahren nach Anspruch 1, wobei die Phase der Übertragung der veränderten Hauptübertragung und der Vielzahl von geschützten komplementären Informationen an die Empfängereinrichtung eine Vielzahl von Phasen der Übertragung von jeder der geschützten komplementären Informationen auf getrennten Wegen umfasst.

3. Verfahren nach Anspruch 2, bei dem die veränderte Hauptübertragung getrennt von jeder geschützten komplementären Informationen übertragen wird.

4. Verfahren nach Anspruch 1 mit einer zusätzlichen Phase die darin besteht die veränderte Hauptübertragung und die Vielzahl von geschützten komplementären Informationen zu bündeln um eine gebündelte Übertragung zu bilden, und wobei die Phase der Übertragung der veränderten Hauptübertragung und der Vielzahl von geschützten komplementären Informationen an die Empfängereinrichtung eine Phase umfasst, die darin besteht, die gebündelte Übertragung zu übertragen.

5. Vorrichtung zum Senden einer veränderten Hauptübertragung aus einer nominalen audiovisuellen Übertragung an eine Empfängereinrichtung, wobei die nominale Übertragung Nennkoeffizienten umfasst, wobei die Vorrichtung folgendes umfasst:
- Mittel zur Veränderung von mindestens ein Nennkoeffizient der besagten Nennkoeffizienten in der nominalen audiovisuellen Übertragung, um eine veränderte Hauptübertragung zu erzeugen mit dem gleichen Format wie die nominale Übertragung;
- Mittel zur Erzeugung einer komplementären Information die mindestens der Nennkoeffizient der nominalen audiovisuellen Übertragung umfasst, so dass die nominalen audiovisuelle Übertragung ausgehend von der komplementären Information und der veränderten Hauptübertragung konsumiert werden kann, wobei die Vorrichtung **dadurch gekennzeichnet ist, dass** sie folgendes umfasst:
- Mittel zur Anwendung einer Vielzahl von Schutzmethoden auf die komplementäre Information, um eine Vielzahl von geschützten komplementären Informationen zu erzeugen, deren jede den Konsum der nominalen Übertragung ausgehend von der veränderten Hauptübertragung erlaubt, bei Anwendung einer mit einer Schutzmethode kompatiblen Zugriffsmethode;
- Mittel zur Übertragung der veränderten Hauptübertragung und der Vielzahl von geschützten komplementären Informationen an die Empfängereinrichtung.

6. Vorrichtung zum Empfang einer veränderten Hauptübertragung und zum Konsum einer nominalen audiovisuellen Übertragung, wobei die Vorrichtung folgendes umfasst:
- Mittel zum Empfang einer veränderten Hauptübertragung und einer Vielzahl von geschützten komplementären Informationen gemäss dem Verfahren des Anspruchs 1
- Zugangsmittel (6) zum Zugang an die komplementäre Information ausgehend von mindestens einer geschützten komplementären Information aus der Vielzahl von geschützten komplementären Informationen;
- Mittel zur Veränderung, auf der Grundlage der komplementären Information, mindestens eines Nennkoeffizienten der besagten Nennkoeffizienten in der veränderten Hauptübertragung, um eine nominale audiovisuelle Übertragung zu erhalten;
- Mittel zum Konsum einer nominalen audiovisuellen Übertragung.

## Claims

1. A method for distributing a modified main stream obtained from a nominal audiovisual stream to a recipient device, the nominal audiovisual stream comprising nominal coefficients, the method being **characterized in that** it comprises the steps of:
- modifying, in the nominal audiovisual stream, at least one nominal coefficient among the nominal coefficients to generate a modified mean stream having the same format as the nominal stream;
- generating a complementary information comprising at least the nominal coefficient of the nominal audiovisual stream such that the nominal audiovisual stream may be used from the complementary information and the modified main stream;
- applying a plurality of methods for protecting the complementary information to generate multiple protected complementary information, each of the protected complementary information enabling the use of the nominal stream from the main stream upon application of an access method compatible with the protection method which has been used to protect it; and
- transmitting to the recipient device the modified main stream and the multiple protected complementary information.

2. The method according to claim 1, in which the step consisting in transmitting to the recipient device the modified main stream and the plurality of protected complementary information includes a plurality of transmission steps for each of the protected complementary information on separate channels.

3. The method according to claim 2, wherein the modified main stream is transmitted separately from each of the protected complementary information.

4. The method according to claim 1, further comprising a step consisting in packing the modified main stream and the plurality of protected complementary information, to form a packed stream, and wherein transmitting to the recipient device a modified main stream and the plurality of protected complementary information further comprises transmitting the packed stream.

5. A device for distributing a modified main stream obtained from a nominal audiovisual stream to a recipient device, the nominal audiovisual stream comprising nominal coefficients, the device comprising:
- means arranged to modify, in the nominal audiovisual stream, at least one nominal coefficient among the nominal coefficients so as to generate a modified main stream having the same format as the nominal stream;
- means arranged to generate a complementary information comprising at least the nominal coefficient of the nominal audiovisual stream so that the nominal audiovisual stream is able to be used from the complementary information and the modified main stream, the device being **characterized in that** it comprises:
- means arranged to apply a plurality of protection methods to the complementary information, to generate a plurality of protected complementary information, each of the respective protected complementary information enabling the nominal stream to be used from the modified main stream in case of the application of an access method compatible with a respective protection method; and
- means arranged to transmit to the recipient device the modified main stream and the plurality of protected complementary information.

6. A device for receiving a modified main stream and using a nominal audiovisual stream comprising:
- means for receiving a modified main stream and a plurality of complementary information protected according to the method of claim 1;
- access means (6) arranged to access the complementary information from at least one piece of protected complementary information among the plurality of protected complementary information; and
- means for modifying, based on the complementary information, in the modified main stream at least one nominal coefficient among nominal coefficients so as to obtain a nominal audiovisual stream;
- means for using the nominal audiovisual stream.
